(19) Europäisches Patentamt / European Patent Office / Office européen des brevets

(11) **EP 4 722 286 A1**

(12) **EUROPEAN PATENT APPLICATION**
published in accordance with Art. 153(4) EPC

(43) Date of publication:
08.04.2026 Bulletin 2026/15

(21) Application number: 24814979.1

(22) Date of filing: 08.04.2024

(51) International Patent Classification (IPC):
*C08L 7/00* (2006.01)        *B60C 1/00* (2006.01)
*C08K 3/013* (2018.01)       *C08L 9/00* (2006.01)
*C08L 67/02* (2006.01)       *C08L 91/00* (2006.01)

(52) Cooperative Patent Classification (CPC):
B60C 1/00; C08K 3/013; C08K 5/01; C08L 7/00;
C08L 9/00; C08L 67/02; C08L 91/00

(86) International application number:
PCT/JP2024/014204

(87) International publication number:
WO 2024/247492 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 JP 2023088525

(71) Applicant: Kao Corporation
Tokyo 103-8210 (JP)

(72) Inventor: KAWAHARA, Hisaho
Tokyo 103-8210 (JP)

(74) Representative: Hoffmann Eitle
Patent- und Rechtsanwälte PartmbB
Arabellastraße 30
81925 München (DE)

(54) **RUBBER COMPOSITION**

(57) Provided are a rubber composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more, a molded rubber body obtained by vulcanizing the rubber composition, a tire member containing the molded rubber body, use of the rubber composition for improving abrasion resistance, and a method for improving abrasion resistance of a molded rubber body containing a rubber component and a polyester.

## Description

Technical Field

The present invention relates to a rubber composition, a molded rubber body, a tire member, a method for producing a rubber composition, a method for producing a molded rubber body, and a method for improving the abrasion resistance of a molded rubber body.

Background Art

Rubber is an amorphous and soft polymeric substance that contains an organic polymer such as natural rubber or synthetic rubber as a main component and is a material (elastic rubber) with a high elastic limit and low elastic modulus. Taking advantage of such properties of rubber, rubber compositions containing rubber are used in various fields such as tires, sealing materials, and vibration-isolating and vibration-proof materials.

Rubber compositions for use in tires and the like contain inorganic fillers and the like in order to improve their elastic moduli. Further, in order to utilize rubber properties and satisfy various required physical properties, a polyester mixing technique is proposed.

For example, JP 2020-94113A (Patent Document 1) discloses, as a rubber composition that has SNOW performance, WET performance, low rolling resistance, and handling stability in a highly balanced manner, a rubber composition containing, in a specific ratio, a rubber component, a filler, a thermoplastic resin (C) containing at least one selected from the group consisting of a styrene-alkylene block copolymer and a polyester polyol resin having an aromatic ring, and a polymeric material (D) that does not have a diene skeleton in its molecular skeleton.

JP 2012-136586A (Patent Document 2) discloses, as a rubber composition that can achieve high elasticity as well as suppressing a significant decrease in tensile elongation and ensuring processability, a rubber composition containing, in a specific ratio, a specific low-polarity diene-based rubber, a specific thermoplastic polyester resin, and a specific high-polarity diene-based rubber.

WO 2021/193795 (Patent Document 3) discloses, as an additive for rubber and a rubber composition with which a molded rubber body that is unlikely to deform and that generates little heat when the molded rubber body deforms can be obtained, an additive for rubber, the additive being made of a polyester, which is a polycondensate of a specific alcohol component and a specific carboxylic acid component, and a rubber composition containing the additive for rubber.

Summary of the Invention

The present invention relates to a rubber composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

Description of the Invention

In the rubber compositions in Patent Documents 1 and 2, the blending of aromatic polyesters is mainly studied, but the abrasion resistance of tire molded bodies containing natural rubber when aliphatic polyesters are used is not studied, and the balance between abrasion resistance and storage modulus is insufficient.

As described in Patent Document 3, the inventor of the present invention has found a molded rubber body that is resistant to deformation and generates little heat even when it deforms, by using an aliphatic polyester as an additive for rubber. However, the abrasion resistance of a tire molded body containing natural rubber has not been fully studied.

The present invention relates to a rubber composition with which a molded rubber body having high abrasion resistance and a high storage modulus can be obtained, a molded rubber body obtained using the rubber composition, a tire member, a method for producing a rubber composition, a method for producing a molded rubber body, and a method for improving the abrasion resistance of a molded rubber body.

The present invention relates to the following [1] to [6].

[1] The present invention relates to a rubber composition comprising: a rubber component; and a polyester, wherein the rubber component comprises natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

[2] A molded rubber body obtained by vulcanizing the rubber composition according to [1] above.

[3] A tire member comprising the molded rubber body according to [2] above.

[4] A method for producing the rubber composition according to [1] above, comprising:

a step (1) of kneading a composition comprising a rubber component and a polyester, wherein the rubber component comprises natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more; and

a step (2) of further adding and mixing sulfur.

[5] A method for producing a molded rubber body, comprising a step of vulcanizing the rubber composition according to [1] above.

[6] A method for improving abrasion resistance of a molded rubber body comprising a rubber component and a polyester, wherein the rubber component comprises natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

According to the present invention, it is possible to provide a rubber composition with which a molded rubber body having high abrasion resistance and a high storage modulus can be obtained, a molded rubber body obtained using the rubber composition, a tire member, a method for producing a rubber composition, a method for producing a molded rubber body, and a method for improving the abrasion resistance of the molded rubber body.

Further, according to the present invention, it is possible to further reduce the loss tangent of the molded rubber body and reduce heat generation from the molded rubber body.

Rubber Composition

A rubber composition according to the present invention is a rubber composition containing a rubber component and a polyester. The rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

According to the rubber composition of the present invention, it is possible to obtain a molded rubber body having high abrasion resistance and a high storage modulus. The reason for this is not necessarily clear, but is conceivable as follows.

Natural rubber contained as the rubber component of the present invention exhibits so-called strain-induced crystallization, in which molecules are oriented and crystallized due to the natural robber being stretched. Natural rubber tends to exhibit significant stress relaxation due to strain-induced crystallization.

On the other hand, the polyester of the present invention is obtained through polycondensation of an alcohol component containing an aliphatic diol having 2 to 16 carbon atoms, and a carboxylic acid component containing an aliphatic dicarboxylic acid compound having 2 to 16 carbon atoms. Since the alcohol component and the carboxylic acid component of the polyester are aliphatic compounds having 2 to 16 carbon atoms, it is conceivable that the polyester is incompatible with the rubber component containing natural rubber in the rubber composition and the molded rubber body, and the polyester forms fine crystals, and the fine crystals form a polyester network in the rubber component. Therefore, it is conceivable that the polyester acts as a nucleus for a strain-induced crystal of the natural rubber contained in the rubber component.

Since the rubber composition of the present invention contains natural rubber and the polyester in this manner, it is conceivable that the strain-induced crystallization of the obtained molded rubber body is facilitated, resulting in excellent abrasion resistance. Furthermore, since the molded rubber body of the present invention has a polyester network as described above, the molded rubber body obtained can exhibit a high storage modulus, and when the molded rubber is used as a tire member or the like, excellent steering stability can be expected.

In addition, since the rubber composition of the present invention has a polyester network as described above, the molded rubber body obtained is unlikely to have a large loss tangent (tan $\delta$) even when the molded rubber body deforms, and heat generation is reduced, and when the molded rubber body is used as a tire member or the like, excellent fuel efficiency can be expected.

Rubber Component

The rubber composition of the present invention contains natural rubber. Since the rubber component includes natural rubber, strain-induced crystallization where the polyester described below serves as a nucleus is facilitated. Therefore, the obtained molded rubber body has excellent abrasion resistance and can also have a high storage modulus.

Examples of natural rubber include SMR, SIR, STR, and RSS. One or more selected from SMR20, STR20, RSS#3, and RSS#4 are preferable, and one or more selected from RSS#3 and RSS#4 are more preferable, and RSS#3 is even more preferable.

Further, modified natural rubber can be used, and examples of modified natural rubber include epoxidized natural rubber and hydrogenated natural rubber.

In the rubber composition of the present invention, the rubber component preferably further contains a synthetic rubber. Since the rubber component further includes a synthetic rubber, the abrasion resistance of the molded rubber body obtained can be improved, and the storage modulus can be increased.

Diene-based synthetic rubber is preferable as the synthetic rubber. Because the abrasion resistance and the storage modulus of the molded rubber body obtained are improved, one or more selected from polyisoprene rubber (IR), polybutadiene rubber (BR), styrene-butadiene copolymer rubber (SBR), acrylonitrile-butadiene copolymer rubber (NBR), chloroprene rubber (CR), butyl rubber (IIR), and polyisobutylene are preferable as the diene-based synthetic rubber, and styrene-butadiene copolymer rubber (SBR) is more preferable.

Among the above diene-based synthetic rubbers, the copolymer rubber may be either a block copolymer or a random copolymer, and from the viewpoint of improving the abrasion resistance and storage modulus of the molded rubber body obtained, a random copolymer is preferable.

The rubber components may be used alone or in combination of two or more.

The styrene-butadiene copolymer rubber (SBR) is a rubber that does not undergo strain-induced crystallization. However, in the present invention, even when the rubber component includes the styrene-butadiene copolymer rubber (SBR), the abrasion resistance and storage modulus of the molded rubber body obtained can be improved.

In the present invention, when the rubber component further contains the synthetic rubber, a mass ratio of the natural rubber content to the synthetic rubber content (the natural rubber/the synthetic rubber) is preferably 50/50 or more, more preferably 60/40 or more, even more preferably 80/20 or more, and still more preferably 90/10 or more, from the viewpoint of improving the abrasion resistance and storage modulus of the molded rubber body obtained and from the viewpoint of reducing the loss tangent of the molded rubber body obtained.

From the viewpoint of improving the abrasion resistance and storage modulus of the molded rubber body obtained, and from the viewpoint of reducing the loss tangent of the molded rubber body obtained, the content of natural rubber in the rubber component is preferably 100% by mass.

Polyester

In the present invention, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

Alcohol Component

In the present invention, the alcohol component of the polyester contains an aliphatic diol having 2 to 16 carbon atoms in an amount of 85% by mass or more, from the viewpoint of improving the abrasion resistance and storage modulus of the molded rubber body obtained. If the content of the aliphatic diol having 2 to 16 carbon atoms in the alcohol component is less than 85% by mass, the abrasion resistance cannot be improved and storage modulus cannot be sufficiently increased, which is not preferable. It is also preferable that the content of the aliphatic diol having 2 to 16 carbon atoms in the alcohol component is 85% by mass or more because the loss tangent of the molded rubber body obtained can be reduced.

The content of the aliphatic diol having 2 to 16 carbon atoms in the alcohol component is preferably 90% by mass or more, more preferably 92% by mass or more, even more preferably 95% by mass or more, and still more preferably substantially 100% by mass.

A chain hydrocarbon group in the aliphatic diol may be linear or branched, and from the viewpoint of improving the abrasion resistance and storage modulus of the molded rubber body obtained, and from the viewpoint of reducing the loss tangent of the molded rubber body obtained, the chain hydrocarbon group is preferably a linear hydrocarbon group, and the hydroxy group thereof is preferably present at an end of the hydrocarbon chain.

That is, the aliphatic diol is more preferably an $\alpha,\omega$-linear alkanediol having 2 to 16 carbon atoms.

From the same viewpoints as above, the number of carbon atoms of the aliphatic diol is 2 or more, preferably 4 or more, more preferably 6 or more, and even more preferably 8 or more, and from the viewpoint of improving the crystallinity of the polyester in the rubber composition and the molded rubber body, the number of carbon atoms of the aliphatic diol is preferably 14 or less, and more preferably 12 or less.

Examples of the aliphatic diols having 2 to 16 carbon atoms, in particular, $\alpha,\omega$-linear alkanediols having 2 to 16 carbon atoms, include ethylene glycol, 1,2-propanediol, 1,3-propanediol, 1,4-butanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, and 1,14-tetradecanediol. In particular, one or more selected from ethylene glycol, 1,4-butanediol, 1,6-hexanediol, 1,8-octanediol, 1,10-decanediol, and 1,12-dodecanediol are preferable, and one or more selected from ethylene glycol, 1,4-butanediol, 1,10-decanediol, and 1,12-dodecanediol are more preferable.

The alcohol component may contain an alcohol other than aliphatic diols having 2 to 16 carbon atoms, within a range such that objects of the present invention are not hindered. Examples of the alcohol component other than the aliphatic diols having 2 to 16 carbon atoms include aromatic diols such as alkylene oxide adducts of bisphenol A, trihydric or higher polyhydric alcohols such as glycerin, pentaerythritol, and trimethylolpropane, and monohydric alcohols.

The alcohol components may be used alone or in combination of two or more.

Carboxylic Acid Component

In the present invention, the carboxylic acid component of the polyester contains an aliphatic dicarboxylic acid compound having 2 to 16 carbon atoms in an amount of 50% by mass or more, from the viewpoint of improving the abrasion resistance and storage modulus of the molded rubber body obtained.

If the content of the aliphatic dicarboxylic acid compound having 2 to 16 carbon atoms in the carboxylic acid component is less than 50% by mass, the abrasion resistance of the molded rubber body obtained cannot be improved and the storage modulus cannot be sufficiently increased, which is not preferable. It is also preferable that the content of the aliphatic dicarboxylic acid compound having 2 to 16 carbon atoms in the alcohol component is 50% by mass or more because the loss tangent of the molded rubber body obtained can be reduced.

The content of the aliphatic dicarboxylic acid compound having 2 to 16 carbon atoms is preferably 60% by mass or more, more preferably 70% by mass or more, even more preferably 80% by mass or more, still more preferably 90% by mass or more, and further preferably substantially 100% by mass, in the carboxylic acid component.

A chain hydrocarbon group in the aliphatic dicarboxylic acid compound may be linear or branched, and from the viewpoint of improving the abrasion resistance and storage modulus of the molded rubber body obtained, and from the viewpoint of reducing the loss tangent of the molded rubber body obtained, the chain hydrocarbon group is preferably a linear hydrocarbon group, and the carboxy groups thereof are preferably present at the end of the hydrocarbon chain.

That is, the aliphatic dicarboxylic acid compound is more preferably an $\alpha,\omega$-linear aliphatic dicarboxylic acid having 2 to 16 carbon atoms.

From the same viewpoints as above, the number of carbon atoms of the aliphatic dicarboxylic acid compound is preferably 4 or more and preferably 14 or less.

Examples of the aliphatic dicarboxylic acid compound having 2 to 16 carbon atoms, in particular, $\alpha,\omega$-linear aliphatic dicarboxylic acids having 2 to 16 carbon atoms, include succinic acid (number of carbon atoms: 4), fumaric acid (number of carbon atoms: 4), sebacic acid (number of carbon atoms: 10), dodecanedioic acid (number of carbon atoms: 12), tetradecanedioic acid (number of carbon atoms: 14), hexadecanedioic acid (number of carbon atoms: 16), and succinic acid having an alkyl group or an alkenyl group on its side chain. The aliphatic dicarboxylic acid compounds also include their acid anhydrides and their alkyl esters having 1 to 3 carbon atoms. In particular, one or more selected from succinic acid, sebacic acid, dodecanedioic acid, tetradecanedioic acid, and hexadecanedioic acid are preferable, one or more selected from succinic acid, sebacic acid, dodecanedioic acid, and tetradecanedioic acid are more preferable, and one or more selected from succinic acid, sebacic acid, and dodecanedioic acid are even more preferable.

In the present invention, the carboxylic acid component includes not only free acids, but also anhydrides that decompose during a reaction to produce acids, and alkyl esters having 1 to 3 carbon atoms. However, the number of carbon atoms in the alkyl group of the alkyl ester moiety is not included in the number of carbon atoms in the aliphatic dicarboxylic acid compound.

The carboxylic acid component may contain other carboxylic acid compounds other than aliphatic dicarboxylic acid compounds having 2 to 16 carbon atoms, within a range such that objects of the present invention are not hindered. Examples of the other carboxylic acid compounds include aromatic dicarboxylic acid compounds such as terephthalic acid and isophthalic acid, trivalent or higher polyvalent carboxylic acid compounds such as trimellitic acid and pyromellitic acid, and monovalent carboxylic acid compounds.

A total content of the aliphatic diol having 2 to 16 carbon atoms and the aliphatic dicarboxylic acid compound having 2 to 16 carbon atoms is preferably 85% by mass or more, more preferably 90% by mass or more, even more preferably 95% by mass or more, and still more preferably substantially 100% by mass, in a raw material monomer for the polyester.

The content of the aliphatic dicarboxylic acid compound having 2 to 16 carbon atoms relative to 100 parts by mole of the aliphatic diol having 2 to 16 carbon atoms is preferably 75 parts by mole or more, and more preferably 85 parts by mole or more, and is preferably 115 parts by mole or less, more preferably 110 parts by mole or less, and still more preferably substantially 105 parts by mole or less.

Production of Polyester

In the present invention, a polyester can be produced using a known method. For example, the polycondensation reaction between the alcohol component and the carboxylic acid component can proceed in an inert gas atmosphere, in the presence of an esterification catalyst, an esterification promoter, a polymerization inhibitor, or the like, as needed, at a temperature of preferably 160°C or higher and 240°C or lower, more preferably 190°C or higher and 230°C or lower.

Examples of the esterification catalyst include metal compounds such as tin catalysts, titanium catalysts, antimony trioxide catalysts, zinc acetate catalysts, and germanium dioxide catalysts. From the viewpoint of the reaction efficiency of the esterification, tin compounds such as dibutyltin oxide and tin(II) 2-ethylhexanoate, and titanium compounds such as titanium diisopropylate bis(triethanolaminate) are preferable.

The amount of the esterification catalyst used is preferably 0.01 parts by mass or more and 1.5 parts by mass or less, and more preferably 0.1 parts by mass or more and 1.0 part by mass or less, relative to 100 parts by mass of the total amount of the alcohol component and the carboxylic acid component.

The esterification promoter is preferably a pyrogallol compound, and specific examples thereof include pyrogallol, gallic acid, gallic acid esters, benzophenone derivatives, and catechin derivatives, and gallic acid is preferable from the viewpoint of reactivity.

The amount of the esterification promotor used is preferably 0.001 parts by mass or more and 0.5 parts by mass or less, and more preferably 0.01 parts by mass or more and 0.1 parts by mass or less, relative to 100 parts by mass of the total amount of the alcohol component and the carboxylic acid component.

Examples of the polymerization inhibitor include tert-butylcatechol and the like.

The amount of the polymerization inhibitor used is preferably 0.001 parts by mass or more and 0.5 parts by mass or less, and more preferably 0.01 parts by mass or more and 0.1 parts by mass or less, relative to 100 parts by mass of the total amount of the alcohol component and the carboxylic acid component.

**In** the present invention, from the viewpoint of improving the abrasion resistance and storage modulus of the molded rubber body obtained and from the viewpoint of reducing the loss tangent of the molded rubber body obtained, the weight average molecular weight of the polyester is preferably 3,000 or more, more preferably 5,000 or more, even more preferably 6,000 or more, still more preferably 7,000 or more, and further preferably 10,000 or more, and is preferably 100,000 or less, more preferably 50,000 or less, even more preferably 40,000 or less, and still more preferably 35,000 or less.

The weight average molecular weight of the polyester can be measured using a method described in Examples.

The polyester of the present invention is preferably a crystalline polyester from the viewpoint of improving the abrasion resistance of the molded rubber body obtained. When a solid polyester is heated, the state of the crystalline polyester resin changes suddenly from a solid state to a molten state at the melting point. On the other hand, the state of an amorphous polyester resin gradually changes from a solid state to a molten state at the glass transition temperature. In the present invention, polyesters that have a recognized melting point are regarded as crystalline polyesters.

In the present invention, from the viewpoint of improving the abrasion resistance and storage modulus of the molded rubber body obtained and from the viewpoint of reducing the loss tangent of the molded rubber body obtained, the melting point of the polyester is preferably 60°C or higher, more preferably 70°C or higher, and even more preferably 75°C or higher, and is preferably 150°C or lower, more preferably 130°C or lower, and even more preferably 120°C or lower.

The melting point of the polyester can be measured using a method described in Examples.

In the present invention, the larger the amount ΔH of heat absorbed by a polyester at a melting endothermic peak through DSC, the higher the crystallinity of the polyester tends to be. Therefore, the larger the amount ΔH of heat absorbed by the polyester at the melting endothermic peak through DSC, the more the polyester is likely to become a nucleus for strain-induced crystallization of natural rubber, and the more easily the strain-induced crystallization of the molded rubber body obtained is facilitated, making it easier to improve the abrasion resistance in particular.

In the present invention, from the viewpoint of improving the abrasion resistance and storage modulus of the molded rubber body obtained and from the viewpoint of reducing the loss tangent of the molded rubber body obtained, the amount ΔH of heat absorbed by the polyester at the melting endothermic peak through DSC is preferably 50 J/g or more, more preferably 70 J/g or more, even more preferably 80 J/g or more, and still more preferably 90 J/g or more, and is preferably 180 J/g or less, more preferably 170 J/g or less, even more preferably 160 J/g or less, and still more preferably 150 J/g or less.

The amount ΔH of heat absorbed by the polyester can be adjusted to the aforementioned range by adjusting the monomer composition, the molecular weight of the polyester, and the like.

The amount ΔH of heat absorbed by the polyester can be measured using a method described in Examples.

In the present invention, Hansen solubility parameters (SP values) of the polyester is preferably 16 $(MPa)^{1/2}$ or more, more preferably 17.0 $(MPa)^{1/2}$ or more, even more preferably 17.5 $(MPa)^{1/2}$ or more, still more preferably 18.0 $(MPa)^{1/2}$ or more, and even more preferably 18.5 $(MPa)^{1/2}$ or more, and is preferably 24.0 $(MPa)^{1/2}$ or less, more preferably 23.5 $(MPa)^{1/2}$ or less, and even more preferably 23.0 $(MPa)^{1/2}$ or less. By setting the SP value of the polyester within the above range, the polyester is not compatible with the rubber components including the natural rubber in the rubber composition and the molded rubber body, and thus facilitates the formation of fine crystals, resulting in the formation of nuclei for strain-induced crystallization with ease, thereby improving abrasion resistance. Furthermore, it is possible to easily form a polyester network in the rubber component, improving the storage modulus.

The SP value can be calculated using solubility parameter calculation software (Hansen Solubility Parameters in Practice 4th Edition 4.1.03). In this specification, Hansen solubility parameters are used for the SP value. The Hansen solubility parameters are calculated based on a chemical structure by dividing the types of interaction energy acting between molecules of a substance into three. Specifically, the SP value δ is calculated using the following equation, where the Hildebrand solubility parameters are divided into three components.

$$\delta = (\delta_d{}^2 + \delta_p{}^2 + \delta_h{}^2)^{1/2}$$

where $\delta_d$ is the London dispersion force term, $\delta_p$ is the molecular polarization term, and $\delta_h$ is the hydrogen bond term. $\delta_d$, $\delta_p$, and $\delta_h$ are described in detail in "HANSEN SOLBILITY PARAMETERS" A User's Handbook Second Edition.

When the SP value cannot be obtained using the above method, the values described in "Solubility Parameter Values" VII, pages 675 to 714 and the like of the Polymer Handbook Fourth Edition) (published by Wiley, 1999) may be used.

In the present invention, the polyester may be a modified polyester, which has been modified to such an extent that its properties are not substantially impaired. Examples of the modified polyester include urethane-modified polyesters in which polyesters are modified with urethane bonds, epoxy-modified polyesters in which polyesters are modified with epoxy bonds, and composite resins having two or more resin components including a polyester component and an addition polymerization-based resin component.

The polyester according to the present invention preferably contains the polyester moiety in an amount of 98% by mass or more, more preferably consists substantially of the polyester moiety, and even more preferably consists substantially of the polyester moiety.

Inorganic Filler

The rubber composition of the present invention preferably further contains an inorganic filler. When the rubber composition further contains an inorganic filler, the abrasion resistance and storage modulus of the molded rubber body obtained can be improved.

There is no particular limitation on the inorganic filler, and examples thereof include silica and carbon black. It is also possible to use alumina, calcium carbonate, clay, talc, zeolite, diatomaceous earth and the like as needed. In particular, the inorganic filler is preferably at least one selected from silica and carbon black.

The inorganic fillers may be used alone or in combination of two or more.

Silica

There is no particular limitation on the type of silica used, and examples thereof include wet silica, dry silica, and colloidal silica. In particular, wet process silica containing hydrous silicic acid as a main component is preferable. Examples of the wet process silica include precipitated silica, gel silica, and sol-gel silica, and precipitated silica is more preferable.

From the viewpoint of dispersibility of the silica in the rubber composition and the molded rubber body and rubber reinforcement, the BET specific surface area of the silica (measured in accordance with ISO 5794/1) is preferably 50 $m^2/g$ or more, more preferably 100 $m^2/g$ or more, and even more preferably 150 $m^2/g$ or more, and is preferably 350 $m^2/g$ or less, more preferably 300 $m^2/g$ or less, and even more preferably 250 $m^2/g$ or less.

From the viewpoint of dispersibility of the silica in the rubber composition and the molded rubber body and rubber reinforcement, the average secondary particle size of the silica is preferably 10 μm or more, more preferably 15 μm or more, and even more preferably 18 μm or more, and is preferably 100 μm or less, more preferably 80 μm or less, and even more preferably 50 μm or less.

Examples of commercially available silica products include trade names: Nipsil AQ (BET specific surface area: 205 $m^2/g$) and Nipsil KQ (BET specific surface area: 240 $m^2/g$) and the like, which are manufactured by Tosoh Silica Corporation, and trade name: ULTRASIL VN3 (BET specific surface area: 175 m$^2$/g) and the like, which are manufactured by Evonik.

Carbon Black

There is no particular limitation on carbon black used, and examples thereof include carbon black of grades such as SAF, ISAF, IISAF, N339, HAF, FEF, GPF, and SRF with a high, medium, or low structure, as well as carbon-silica dual phase fillers in which silica is carried on the surface of carbon black. In particular, carbon blacks of SAF, ISAF, IISAF, N339, HAF, and FEF grades are preferable.

The DBP absorption of carbon black (measured in accordance with ASTM D2414-65T) is preferably 70 cm$^3$/100 g or more, more preferably 80 cm$^3$/100 g or more, and even more preferably 90 cm$^3$/100 g or more.

Further, the nitrogen adsorption specific surface area of carbon black (measured in accordance with N$_2$AS, JIS K 6217-2:2017) is preferably 50 m$^2$/g or more, more preferably 60 m$^2$/g or more, and even more preferably 70 m$^2$/g or more.

Sulfur

The rubber composition of the present invention preferably contains sulfur as a vulcanizing agent in order to vulcanize the rubber composition to form a molded rubber body.

Examples of sulfur include sulfur powder, precipitated sulfur, colloidal sulfur, insoluble sulfur, highly dispersible sulfur, soluble sulfur, and the like, which are commonly used in the rubber industry.

The sulfur may be used alone or in combination of two or more types.

Other Components

In addition to the above-mentioned components, the rubber composition of the present invention may contain, if desired, various additives usually used in the rubber industry, such as a silane coupling agent, an antioxidant, a scorch inhibitor, a softener, stearic acid, process oil, zinc oxide, a vulcanization accelerator, or the like, within a range such that objects of the present invention are not hindered.

Process Oil

A process oil having a pour point of 40°C or lower is preferable.

From the viewpoint of improving the processability of the rubber composition, as the process oil, one or more selected from aromatic process oil, naphthenic process oil, and paraffinic process oil are preferable, and naphthenic process oil is more preferable.

Content of Each Component in Rubber Composition

In the rubber composition of the present invention, from the viewpoint of improving the abrasion resistance and storage modulus of the molded rubber body obtained and from the viewpoint of reducing the loss tangent of the molded rubber body obtained, the content of the polyester is preferably 1.0 part by mass or more, more preferably 1.2 parts by mass or more, and even more preferably 1.4 parts by mass or more, and from the viewpoint of maintaining physical properties of the rubber component, is preferably 30 parts by mass or less, more preferably 25 parts by mass or less, even more preferably 20 parts by mass or less, still more preferably 15 parts by mass or less, and further preferably 12 parts by mass or less, relative to 100 parts by mass of the rubber component.

In the rubber composition of the present invention, from the viewpoint of improving the abrasion resistance and storage modulus of the molded rubber body obtained, a mass ratio of a polyester content to a natural rubber content ([the polyester content]/[the natural rubber content]) is preferably 0.01 or more, and more preferably 0.02 or more, and from the viewpoint of reducing the loss tangent of the molded rubber body obtained, is preferably 0.20 or less, more preferably 0.10 or less, and even more preferably 0.05 or less.

From the viewpoint of maintaining physical properties of the rubber component, the content of the rubber component in the rubber composition is preferably 30% by mass or more, more preferably 35% by mass or more, even more preferably 40% by mass or more, and still more preferably 45% by mass or more, and is preferably 80% by mass or less, more preferably 75% by mass or less, even more preferably 70% by mass or less, and still more preferably 65% by mass or less.

From the viewpoint of improving the abrasion resistance and storage modulus of the molded rubber body obtained, the content of the inorganic filler is preferably 30 parts by mass or more, more preferably 35 parts by mass or more, even more preferably 40 parts by mass or more, and still more preferably 45 parts by mass or more, and from the viewpoint of reducing heat generation from the molded rubber body, is preferably 200 parts by mass or less, more preferably 180 parts by mass or less, even more preferably 150 parts by mass or less, still more preferably 100 parts by mass or less, and further preferably 80 parts by mass or less, relative to 100 parts by mass of the rubber component.

From the viewpoint of sufficiently vulcanizing an unvulcanized rubber composition, the sulfur content is preferably 0.3 parts by mass or more, more preferably 0.5 parts by mass or more, and even more preferably 0.8 parts by mass or more, and is preferably 3 parts by mass or less, more preferably 2.5 parts by mass or less, and even more preferably 2 parts by mass or less, relative to 100 parts by mass of the unvulcanized rubber composition.

When the rubber composition of the present invention further contains a process oil, from the viewpoint of improving the processability of the rubber composition, the content of the process oil is preferably 4 parts by mass or more and 16 parts by mass or less, more preferably 6 parts by mass or more and 14 parts by mass or less, and even more preferably 8 parts by mass or more and 12 parts by mass or less, relative to 100 parts by mass of the rubber composition.

Production of Rubber Composition

A method for producing a rubber composition according to the present invention includes the following steps (1) and (2).

The step (1): a step of kneading a composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more

The step (2): a step of further adding and mixing sulfur

In the step (1), more specifically, it is preferable to obtain a rubber kneaded product by kneading the rubber component, the polyester, and as needed, an inorganic filler, a silane coupling agent, an antioxidant, a scorch inhibitor, a softener, stearic acid, a process oil, and the like, using a kneading machine.

Examples of the kneading machine include a Banbury mixer, a roll, and an intensive mixer.

From the viewpoint of improving dispersibility of the polyester in the rubber composition and improving the abrasion resistance and storage modulus of the molded rubber body obtained, the kneading temperature is preferably 140°C or higher, more preferably 143°C or higher, and even more preferably 145°C or higher, and is preferably 165°C or lower, more preferably 160°C or lower, and even more preferably 155°C or lower.

The step (2) is a step of further adding and mixing sulfur after the step (1).

In the step (2), more specifically, it is preferable to add and mix sulfur, and, as needed, zinc oxide and a vulcanization accelerator (sulfenamide type, guanidine type, or the like), and the like.

The mixing temperature in the step (2) is preferably less than 140°C, more preferably 130°C or lower, even more preferably 125°C or lower, and still more preferably 120°C or lower from the viewpoint of preventing vulcanization reaction.

Molded Rubber Body

The molded rubber body of the present invention is obtained by vulcanizing the aforementioned rubber composition of the present invention, i.e., the unvulcanized rubber composition.

The unvulcanized rubber composition can be molded using a known method and heated or heated and hot-pressed at preferably 140°C or higher, and more preferably 145°C or higher, and preferably 200°C or lower, and more preferably 180°C or lower, to form a vulcanized molded rubber body.

The contents of the rubber component, the polyester, and additives such as an inorganic filler in the molded rubber body of the present invention, and preferable ranges thereof are the same as those in the rubber composition.

Since the molded rubber body of the present invention is obtained by vulcanizing the aforementioned rubber composition of the present invention and thus has excellent abrasion resistance and storage modulus, the molded rubber body can be suitably used as molded rubber bodies for tire members such as tires, and inner liners, treads, tread bases, carcasses, sidewalls, and bead portions of tires, as well as various rubber belts, various sealing materials, vibration-isolating and vibration-proof materials, shoe soles, and the like.

Method for Producing Molded Rubber Body

A method for producing a molded rubber body according to the present invention includes a step of vulcanizing the rubber composition according to the present invention.

Specifically, the step of vulcanizing the rubber composition is a step of obtaining a molded rubber body by molding the rubber composition of the present invention to a desired shape, and heating or heating and hot-pressing the rubber composition at 140°C or higher, and more preferably 145°C or higher, and preferably 200°C or lower, and more preferably 180°C or lower.

The contents of the rubber component, the polyester, and additives such as an inorganic filler in the molded rubber body obtained, and preferable ranges thereof are the same as those in the rubber composition.

Tire Member

The tire member according to the present invention includes the molded rubber body according to the present invention. The tire member according to the present invention includes the molded rubber body according to the present invention and thus has excellent abrasion resistance and storage modulus.

Examples of the tire member according to the present invention include inner liners, treads, tread bases, carcasses, sidewalls, and bead portions of tires.

Method for Improving Abrasion Resistance

A method for improving the abrasion resistance of the molded rubber body according to the present invention is a method for improving the abrasion resistance of the molded rubber body containing the rubber component and the polyester, and the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

It is conceivable that by using the method for improving abrasion resistance according to the present invention, it is possible to improve the abrasion resistance of the molded rubber body because the molded rubber body contains natural rubber as the rubber component and the polyester, which facilitates the strain-induced crystallization of the molded rubber body.

In the method for improving the abrasion resistance of the molded rubber body according to the present invention, the contents of the rubber component, the polyester, the inorganic filler, sulfur, and other additives in the molded rubber body, and preferable ranges thereof are the same as those in the rubber composition.

The present invention further includes the following aspects.

<1> A rubber composition containing:

a rubber component; and
a polyester,
wherein the rubber component contains natural rubber,
the polyester is a polycondensate of an alcohol component and a carboxylic acid component,
a content of an aliphatic diol having 2 to 16 carbon atoms in the alcohol component is 85% by mass or more, and
a content of an aliphatic dicarboxylic acid compound having 2 to 16 carbon atoms in the carboxylic acid component is 50% by mass or more.

<2> The rubber composition according to <1>, wherein a mass ratio of a polyester content to a natural rubber content ([the polyester content]/[the natural rubber content]) is 0.01 or more and 0.20 or less.

<3> A rubber composition containing:

a rubber component; and
a polyester,
wherein the rubber component contains natural rubber,
the polyester is a polycondensate of an alcohol component and a carboxylic acid component,
a content of an aliphatic diol having 2 to 16 carbon atoms in the alcohol component is 85% by mass or more, and
a content of an aliphatic dicarboxylic acid compound having 2 to 16 carbon atoms in the carboxylic acid component is 50% by mass or more, and
a mass ratio of a polyester content to a natural rubber content ([the polyester content]/[the natural rubber content]) is 0.01 or more and 0.20 or less.

<4> The rubber composition according to any one of <1> to <3>, wherein the rubber component further contains a synthetic rubber.

<5> The rubber composition according to <4>, wherein a mass ratio of a natural rubber content to a synthetic rubber content (the natural rubber/the synthetic rubber) is 50/50 or more.

<6> A rubber composition containing:

a rubber component; and
a polyester,
wherein the rubber component contains natural rubber and a synthetic rubber,
the polyester is a polycondensate of an alcohol component and a carboxylic acid component,
a content of an aliphatic diol having 2 to 16 carbon atoms in the alcohol component is 85% by mass or more,
a content of an aliphatic dicarboxylic acid compound having 2 to 16 carbon atoms in the carboxylic acid component is 50% by mass or more,
a mass ratio of a natural rubber content to a synthetic rubber content ([the natural rubber]/[the synthetic rubber]) is 50/50 or more, and
a mass ratio of a polyester content to a natural rubber content ([the polyester content]/[the natural rubber content]) is 0.01 or more and 0.20 or less.

<7> The rubber composition according to any one of <1> to <6>, wherein the aliphatic diol is an $\alpha,\omega$-linear alkanediol having 2 to 16 carbon atoms.

<8> The rubber composition according to any one of <1> to <7>, wherein the aliphatic dicarboxylic acid compound is an $\alpha,\omega$-linear aliphatic dicarboxylic acid having 2 to 16 carbon atoms, preferably an $\alpha,\omega$-linear aliphatic dicarboxylic acid having 4 to 14 carbon atoms, more preferably an $\alpha,\omega$-linear aliphatic dicarboxylic acid having 6 to 14 carbon atoms, and even more preferably an $\alpha,\omega$-linear aliphatic dicarboxylic acid having 6 to 14 carbon atoms.

<9> The rubber composition according to any one of <1> to <8>, wherein the content of the aliphatic dicarboxylic acid compound having 2 to 16 carbon atoms is 60% by mass or more, preferably 70% by mass or more, more preferably 80% by mass or more, even more preferably 90% by mass or more, and still more preferably substantially 100% by mass, in the carboxylic acid component.

<10> The rubber composition according to any one of <1> to <9>, wherein the aliphatic dicarboxylic acid compound has 4 to 14 carbon atoms.

<11> The rubber composition according to any one of <1> to <10>, wherein a total content of the aliphatic diol having 2 to 16 carbon atoms and the aliphatic dicarboxylic acid compound having 2 to 16 carbon atoms is 85% by mass or more, preferably 90% by mass or more, more preferably 95% by mass or more, and even more preferably substantially 100% by mass, in a raw material monomer for the polyester.

<12> The rubber composition according to any one of <1> to <11>, wherein the content of the aliphatic dicarboxylic acid compound having 2 to 16 carbon atoms relative to 100 parts by mole of the aliphatic diol having 2 to 16 carbon atoms is 75 parts by mole or more and 115 parts by mole or less, preferably 85 parts by mole or more and 110 parts by mole or less, more preferably 85 parts by mole or more and 115 parts by mole or less, even more preferably 85 parts by mole or more and 110 parts by mole or less, and still more preferably 85 parts by mole or more and 105 parts by mole or less.

<13> The rubber composition according to any one of <1> to <12>, wherein a weight average molecular weight of the polyester is 3000 or more and 100,000 or less, preferably 5000 or more and 50,000 or less, more preferably 6,000 or more and 40,000 or less, even more preferably 7,000 or more and 35,000 or less, and still more preferably 10,000 or more and 35,000 or less.

<14> The rubber composition according to any one of <1> to <13>, wherein the polyester has a melting point of 60°C or higher and 150°C or lower, preferably 70°C or higher and 130°C or lower, and more preferably 75°C or higher and 120°C or lower.

<15> The rubber composition according to any one of <4> to <14>, wherein the synthetic rubber is a diene-based synthetic rubber.

<16> The rubber composition according to any one of <4> to <15>, wherein the synthetic rubber includes a diene-based synthetic rubber, preferably includes one or more selected from polyisoprene rubber (IR), polybutadiene rubber (BR), styrene-butadiene copolymer rubber (SBR), acrylonitrile-butadiene copolymer rubber (NBR), chloroprene rubber (CR), butyl rubber (IIR), and polyisobutylene, and more preferably includes styrene-butadiene copolymer rubber (SBR).

<17> The rubber composition according to any one of <4> to <16>, wherein a mass ratio of a natural rubber content to a synthetic rubber content (the natural rubber/the synthetic rubber) is 60/40 or more, preferably 80/20 or more, and more preferably 90/10 or more.

<18> The rubber composition according to any one of <1> to <17>, wherein a mass ratio of a polyester content to a natural rubber content ([the polyester content]/[the natural rubber content]) is 0.02 or more and 0.10 or less, and preferably 0.02 or more and 0.05 or less.

<19> The rubber composition according to any one of <1> to <18>, further containing an inorganic filler.

**EP 4 722 286 A1**

<20> The rubber composition according to any one of <1> to <19>, further containing a process oil, wherein a process oil content is 4 parts by mass or more and 16 parts by mass or less relative to 100 parts by mass of the rubber component.

<21> The rubber composition according to any one of <1> to <20>, wherein a polyester content is 1.0 part by mass or more and 30 parts by mass or less, preferably 1.2 parts by mass or more and 25 parts by mass or less, more preferably 1.4 parts by mass or more and 20 parts by mass or less, even more preferably 1.4 parts by mass or more and 15 parts by mass or less, and still more preferably 1.4 parts by mass or more and 12 parts by mass or less, relative to 100 parts by mass of the rubber component.

<22> The rubber composition according to any one of <1> to <21>, wherein a rubber component content is 30% by mass or more and 80% by mass or less, preferably 35% by mass or more and 75% by mass or less, more preferably 40% by mass or more and 70% by mass or less, and even more preferably 45% by mass or more and 65% by mass or less, in the rubber composition.

<23> A molded rubber body obtained by vulcanizing the rubber composition according to any one of <1> to <22>.

<24> A tire member including the molded rubber body according to <23>.

<25> A method for producing the rubber composition according to any one of <1> to <22>, including:

a step (1) of kneading a composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more; and
a step (2) of further adding and mixing sulfur.

<26> A method for producing a molded rubber body, including a step of vulcanizing the rubber composition according to any one of <1> to <22>.

<27> A method for producing a rubber composition, including:

a step (1) of kneading a composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more; and
a step (2) of further adding and mixing sulfur.

<28> The method for producing a rubber composition according to <27>, wherein a mass ratio of a polyester content to a natural rubber content in the composition in the step (1) ([the polyester content]/[the natural rubber content]) is 0.01 or more and 0.20 or less.

<29> A method for producing a rubber composition, including:

a step (1) of kneading a composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more, and a mass ratio of a polyester content to a natural rubber content ([the polyester content]/[the natural rubber content]) is 0.01 or more and 0.20 or less; and
a step (2) of further adding and mixing sulfur.

<30> The method for producing a rubber composition according to any one of <27> to <29>, wherein the rubber component further contains a synthetic rubber.

<31> The method for producing a rubber composition according to <30>, wherein a mass ratio of a natural rubber content to a synthetic rubber content in the composition in the step (1) (the natural rubber/the synthetic rubber) is 50/50 or more.

<32> A method for producing a rubber composition, including:

a step (1) of kneading a composition containing a rubber component and a polyester, wherein the rubber component contains natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more, a mass ratio of a natural rubber content to a synthetic rubber content (the natural rubber/the synthetic rubber) is 50/50 or more, and a mass ratio of a polyester content to a natural rubber content ([the polyester content]/[the natural rubber content]) is 0.01 or more and 0.20 or less; and a step (2) of further adding and mixing sulfur.

<33> The method for producing a rubber composition according to any one of <27> to <32>, wherein the aliphatic diol is an $\alpha,\omega$-linear alkanediol having 2 to 16 carbon atoms.

<34> The method for producing a rubber composition according to any one of <27> to <33>, wherein the aliphatic dicarboxylic acid compound is an $\alpha,\omega$-linear aliphatic dicarboxylic acid having 2 to 16 carbon atoms, preferably an $\alpha,\omega$-linear aliphatic dicarboxylic acid having 4 to 14 carbon atoms, more preferably an $\alpha,\omega$-linear aliphatic dicarboxylic acid having 6 to 14 carbon atoms, and even more preferably an $\alpha,\omega$-linear aliphatic dicarboxylic acid having 6 to 14 carbon atoms.

<35> The method for producing a rubber composition according to any one of <27> to <34>, wherein the content of the aliphatic dicarboxylic acid compound having 2 to 16 carbon atoms in the composition in the step (1) is 60% by mass or more, preferably 70% by mass or more, more preferably 80% by mass or more, even more preferably 90% by mass or more, and still more preferably substantially 100% by mass, in the carboxylic acid component.

<36> The method for producing a rubber composition according to any one of <27> to <35>, wherein the aliphatic dicarboxylic acid compound has 4 to 14 carbon atoms.

<37> The method for producing a rubber composition according to any one of <27> to <36>, wherein a total content of the aliphatic diol having 2 to 16 carbon atoms and the aliphatic dicarboxylic acid compound having 2 to 16 carbon atoms in the composition in the step (1) is 85% by mass or more, preferably 90% by mass or more, more preferably 95% by mass or more, and even more preferably substantially 100% by mass, in a raw material monomer for the polyester.

<38> The method for producing a rubber composition according to any one of <27> to <37>, wherein a content of the aliphatic dicarboxylic acid compound having 2 to 16 carbon atoms relative to 100 parts by mole of the aliphatic diol having 2 to 16 carbon atoms in the composition in the step (1) is 75 parts by mole or more and 115 parts by mole or less, preferably 85 parts by mole or more and 110 parts by mole or less, more preferably 85 parts by mole or more and 115 parts by mole or less, even more preferably 85 parts by mole or more and 110 parts by mole or less, and still more preferably 85 parts by mole or more and 105 parts by mole or less.

<39> The method for producing a rubber composition according to any one of <27> to <38>, wherein a weight average molecular weight of the polyester is 3000 or more and 100,000 or less, preferably 5000 or more and 50,000 or less, more preferably 6,000 or more and 40,000 or less, even more preferably 7,000 or more and 35,000 or less, and still more preferably 10,000 or more and 35,000 or less.

<40> The method for producing a rubber composition according to any one of <27> to <39>, wherein the polyester has a melting point of 60°C or higher and 150°C or lower, preferably 70°C or higher and 130°C or lower, and more preferably 75°C or higher and 120°C or lower.

<41> The method for producing a rubber composition according to any one of <30> to <40>, wherein the synthetic rubber is a diene-based synthetic rubber.

<42> The method for producing a rubber composition according to any one of <30> to <41>, wherein the synthetic rubber includes a diene-based synthetic rubber, preferably includes one or more selected from polyisoprene rubber (IR), polybutadiene rubber (BR), styrene-butadiene copolymer rubber (SBR), acrylonitrile-butadiene copolymer rubber (NBR), chloroprene rubber (CR), butyl rubber (IIR), and polyisobutylene, and more preferably includes styrene-butadiene copolymer rubber (SBR).

<43> The method for producing a rubber composition according to any one of <30> to <42>, wherein a mass ratio of a natural rubber content to a synthetic rubber content in the composition in the step (1) (the natural rubber/the synthetic rubber) is 60/40 or more, preferably 80/20 or more, and more preferably 90/10 or more.

<44> The method for producing a rubber composition according to any one of <27> to <43>, wherein a mass ratio of a polyester content to a natural rubber content in the composition in the step (1) ([the polyester content]/[the natural rubber content]) is 0.02 or more and 0.10 or less, and preferably 0.02 or more and 0.05 or less.

<45> The method for producing a rubber composition according to any one of <27> to <44>, wherein the composition in the step (1) further contains an inorganic filler.

<46> The method for producing a rubber composition according to any one of <27> to <45>, wherein the composition in the step (1) further contains a process oil, a process oil content is 4 parts by mass or more and 16 parts by mass or less relative to 100 parts by mass of the rubber component.

<47> The method for producing a rubber composition according to any one of <27> to <46>, wherein a polyester content in the composition in the step (1) is 1.0 part by mass or more and 30 parts by mass or less, preferably 1.2 parts by mass or more and 25 parts by mass or less, more preferably 1.4 parts by mass or more and 20 parts by mass or less, even more preferably 1.4 parts by mass or more and 15 parts by mass or less, and still more preferably 1.4 parts by mass or more and 12 parts by mass or less, relative to 100 parts by mass of the rubber component.

<48> The method for producing a rubber composition according to any one of <27> to <47>, wherein a rubber component content is 30% by mass or more and 80% by mass or less, preferably 35% by mass or more and 75% by mass or less, more preferably 40% by mass or more and 70% by mass or less, and even more preferably 45% by mass or more and 65% by mass or less, in the composition in the step (1).

<49> Use of the rubber composition according to any one of <1> to <22>, for improving abrasion resistance.

<50> A method for improving abrasion resistance of a molded rubber body containing a rubber component and a polyester,

wherein the rubber component contains natural rubber,
the polyester is a polycondensate of an alcohol component and a carboxylic acid component,
a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

<51> The method for improving abrasion resistance of a molded rubber body according to <50>, wherein a mass ratio of a polyester content to a natural rubber content in the molded rubber body ([the polyester content]/[the natural rubber content]) is 0.01 or more and 0.20 or less.

<52> A method for improving abrasion resistance of a molded rubber body containing a rubber component and a polyester,

wherein the rubber component contains natural rubber,
the polyester is a polycondensate of an alcohol component and a carboxylic acid component,
a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more, and
a mass ratio of a polyester content to a natural rubber content ([the polyester content]/[the natural rubber content]) is 0.01 or more and 0.20 or less.

<53> The method for improving abrasion resistance of a molded rubber body according to any one of <50> to <52>, wherein the rubber component further contains a synthetic rubber.

<54> The method for improving abrasion resistance of a molded rubber body according to <53>, wherein a mass ratio of a natural rubber content to a synthetic rubber content in the molded rubber body (the natural rubber/the synthetic rubber) is 50/50 or more.

<55> A method for improving abrasion resistance of a molded rubber body containing a rubber component and a polyester,

wherein the rubber component contains natural rubber,
the polyester is a polycondensate of an alcohol component and a carboxylic acid component,
a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more, and
a mass ratio of a natural rubber content to a synthetic rubber content (the natural rubber/the synthetic rubber) is 50/50 or more, and
a mass ratio of a polyester content to a natural rubber content ([the polyester content]/[the natural rubber content]) is 0.01 or more and 0.20 or less.

<56> The method for improving abrasion resistance of a molded rubber body according to any one of <50> to <55>, wherein the aliphatic diol is an $\alpha,\omega$-linear alkanediol having 2 to 16 carbon atoms.

<57> The method for improving abrasion resistance of a molded rubber body according to any one of <50> to <56>, wherein the aliphatic dicarboxylic acid compound is an $\alpha,\omega$-linear aliphatic dicarboxylic acid having 2 to 16 carbon atoms, preferably an $\alpha,\omega$-linear aliphatic dicarboxylic acid having 4 to 14 carbon atoms, more preferably an $\alpha,\omega$-linear aliphatic dicarboxylic acid having 6 to 14 carbon atoms, and even more preferably an $\alpha,\omega$-linear aliphatic dicarboxylic acid having 6 to 14 carbon atoms.

<58> The method for improving abrasion resistance of a molded rubber body according to any one of <50> to <57>, wherein the content of the aliphatic dicarboxylic acid compound having 2 to 16 carbon atoms in the molded rubber body is 60% by mass or more, preferably 70% by mass or more, more preferably 80% by mass or more, even more preferably 90% by mass or more, and still more preferably substantially 100% by mass, in the carboxylic acid component.

<59> The method for improving abrasion resistance of a molded rubber body according to any one of <50> to <58>, wherein the aliphatic dicarboxylic acid compound has 4 to 14 carbon atoms.

<60> The method for improving abrasion resistance of a molded rubber body according to any one of <50> to <59>, wherein a total content of the aliphatic diol having 2 to 16 carbon atoms and the aliphatic dicarboxylic acid compound having 2 to 16 carbon atoms in the molded rubber body is 85% by mass or more, preferably 90% by mass or more, more preferably 95% by mass or more, and even more preferably substantially 100% by mass, in a raw material monomer for the polyester.

<61> The method for improving abrasion resistance of a molded rubber body according to any one of <50> to <60>, wherein the content of the aliphatic dicarboxylic acid compound having 2 to 16 carbon atoms relative to 100 parts by mole of the aliphatic diol having 2 to 16 carbon atoms in the molded rubber body is 75 parts by mole or more and 115 parts by mole or less, preferably 85 parts by mole or more and 110 parts by mole or less, more preferably 85 parts by mole or more and 115 parts by mole or less, even more preferably 85 parts by mole or more and 110 parts by mole or less, and still more preferably 85 parts by mole or more and 105 parts by mole or less.

<62> The method for improving abrasion resistance of a molded rubber body according to any one of <50> to <61>, wherein a weight average molecular weight of the polyester is 3000 or more and 100,000 or less, preferably 5000 or more and 50,000 or less, more preferably 6,000 or more and 40,000 or less, even more preferably 7,000 or more and 35,000 or less, and still more preferably 10,000 or more and 35,000 or less.

<63> The method for improving abrasion resistance of a molded rubber body according to any one of <50> to <62>, wherein the polyester has a melting point of 60°C or higher and 150°C or lower, preferably 70°C or higher and 130°C or lower, and more preferably 75°C or higher and 120°C or lower.

<64> The method for improving abrasion resistance of a molded rubber body according to any one of <53> to <63>, wherein the synthetic rubber is a diene-based synthetic rubber.

<65> The method for improving abrasion resistance of a molded rubber body according to any one of <53> to <64>, wherein the synthetic rubber includes a diene-based synthetic rubber, preferably includes one or more selected from polyisoprene rubber (IR), polybutadiene rubber (BR), styrene-butadiene copolymer rubber (SBR), acrylonitrile-butadiene copolymer rubber (NBR), chloroprene rubber (CR), butyl rubber (IIR), and polyisobutylene, and more preferably includes styrene-butadiene copolymer rubber (SBR).

<66> The method for improving abrasion resistance of a molded rubber body according to any one of <53> to <65>, wherein a mass ratio of a natural rubber content to a synthetic rubber content (the natural rubber/the synthetic rubber) in the molded rubber body is 60/40 or more, preferably 80/20 or more, and more preferably 90/10 or more.

<67> The method for improving abrasion resistance of a molded rubber body according to any one of <50> to <66>, wherein a mass ratio of a polyester content to a natural rubber content in the composition in the step (1) ([the polyester content]/[the natural rubber content]) is 0.02 or more and 0.10 or less, and preferably 0.02 or more and 0.05 or less.

<68> The method for improving abrasion resistance of a molded rubber body according to any one of <50> to <67>, wherein the molded rubber body further contains an inorganic filler.

<69> The method for improving abrasion resistance of a molded rubber body according to any one of <50> to <68>, wherein the molded rubber body further contains a process oil, and a process oil content is 4 parts by mass or more and 16 parts by mass or less relative to 100 parts by mass of the rubber component.

<70> The method for improving abrasion resistance of a molded rubber body according to any one of <50> to <69>, wherein a polyester content in the molded rubber body is 1.0 part by mass or more and 30 parts by mass or less, preferably 1.2 parts by mass or more and 25 parts by mass or less, more preferably 1.4 parts by mass or more and 20 parts by mass or less, even more preferably 1.4 parts by mass or more and 15 parts by mass or less, and still more preferably 1.4 parts by mass or more and 12 parts by mass or less, relative to 100 parts by mass of the rubber component.

<71> The method for improving abrasion resistance of a molded rubber body according to any one of <50> to <70>, wherein a rubber component content is 30% by mass or more and 80% by mass or less, preferably 35% by mass or more and 75% by mass or less, more preferably 40% by mass or more and 70% by mass or less, and even more preferably 45% by mass or more and 65% by mass or less, in the molded rubber body.

Examples

Hereinafter, the present invention will be described in detail with reference to examples. However, the present invention is not limited to these examples in any way. Each property value was measured and evaluated using the following methods.

Measurement of Melting Point of Polyester and Amount ∆H of Heat Absorbed at Melting Endothermic Peak through Differential Scanning Calorimetry (DSC)

A melting point of the polyester was measured as follows: 0.02 g of the polyester powder sample obtained through freeze-drying was weighed into an aluminum pan, and the melting point was measured using a differential scanning calorimeter (product name: Q-100 manufactured by TA instruments) by cooling the sample from room temperature (20°C) to 0°C at a temperature decrease rate of 10°C/min, allowing the sample to stand for 1 minute, and then heating the sample to 180°C at a temperature increase rate of 10°C/min. Among the endothermic peaks observed, the temperature at a peak on the highest temperature side was determined as the melting point of the polyester.

Also, the amount ∆H (J/g) of heat absorbed per gram of the polyester was calculated from the area at the melting endothermic peak.

Measurement of SP value of Polyester

The SP value was calculated based on the Hansen solubility parameters using solubility parameter calculation software (Hansen Solubility Parameters in Practice 4th Edition 4.1.03). Note that the specific gravity of the polyester was set to 1.0 in the calculation of the SP value.

Measurement of Weight Average Molecular Weight of Polyester

A molecular weight distribution was measured through gel permeation chromatography (GPC) below to determine the weight average molecular weight (Mw) of the polyester.

(1) The polymer was dissolved in chloroform such that the sample solution had an adjusted concentration of 0.5 g/100 mL. Then, the solution was filtered using a fluororesin filter with a pore size of 2 $\mu$m (product name: FP-200 manufactured by Sumitomo Electric Industries, Ltd.) to remove insoluble components, and thus a sample solution was prepared.

(2) Using a molecular weight measuring device (product name: CO-8010, analytical column: GMHXL + G3000HXL manufactured by Tosoh Corporation), chloroform was used as the eluent at a flow rate of 1 ml per minute, and the column was stabilized in the thermostatic bath at 40°C. Then, 100 $\mu$l of the sample solution was injected therein and the measurement was carried out. The molecular weight of the sample was calculated based on a calibration curve prepared in advance. For the calibration curve, several types of monodisperse polystyrene (monodisperse polystyrene manufactured by Tosoh Corporation; $2.63 \times 10^3$, $2.06 \times 10^4$, $1.02 \times 10^5$, monodisperse polystyrene manufactured by GL Sciences Inc.; $2.10 \times 10^3$, $7.00 \times 10^3$, $5.04 \times 10^4$ (number average molecular weight)) were used as standard samples.

Production Examples 1 to 5 (Production of Polyesters A to D and M)

The raw material monomers shown in Table 1 and 20 g of tin(II) 2-ethylhexanoate were placed in a 10 L four-neck flask equipped with a nitrogen inlet tube, a dehydration tube, a stirrer, and a thermocouple, and the resulting mixture was maintained at 140°C for 6 hours, heated to 200°C over a period of 6 hours, allowed to react at 200°C for 1 hour, and then reacted at 8.3 kPa for 1 hour to obtain polyesters A to D and M. The results are shown in Table 1.

Details of each component shown in Table 1 are as follows.

Alcohol Component

- EG: Ethylene glycol
- 1,2-PD: 1,2-Propanediol
- 1,4-BD: 1,4-Butanediol
- 1,10-DD: 1,10-Decanediol
- 1,12-DD: 1,12-Dodecanediol

Carboxylic Acid Component

- Succinic acid
- Sebacic acid
- DDA: Dodecanedioic acid
- TPA: Tetraphthalic acid
- TMA: Trimellitic acid

[Table 1]

| | | | Production Example 1 | Production Example 2 | Production Example 3 | Production Example 4 | Production Example 5 |
|---|---|---|---|---|---|---|---|
| Polyester | | | Polyester A | Polyester B | Polyester C | Polyester D | Polyester M |
| Alcohol Component | Aliphatic diol having 2 to 16 carbon atoms (g) | EG | - | 2123 | - | - | - |
| | | 1,2-PD | - | - | - | - | 3450 |
| | | 1,4-BD | - | - | - | 4400 | - |
| | | 1,10-DD | - | - | 4628 | - | |
| | | 1,12-DD | 4676 | - | - | - | - |
| | Content of aliphatic diol having 2 to 16 carbon atoms in alcohol component | (mole%) | 100 | 100 | 100 | 100 | 100 |
| | | (mass%) | 100 | 100 | 100 | 100 | 100 |
| Carboxylic acid component | Aliphatic dicarboxylic acid compound having 2 to 16 carbon atoms (g) | Succinic acid | - | - | - | 5600 | - |
| | | Sebacic acid | - | - | 5372 | - | |
| | | DDA | 5324 | 7877 | - | - | - |
| | Content of other carboxylic acid compound | TPA | - | - | - | - | 6028 |
| | | TMA | - | - | - | - | 523 |
| | Content of aliphatic dicarboxylic acid compound having 2 to 16 carbon atoms in carboxylic acid component | (mole%) | 100 | 100 | 100 | 100 | 0 |
| | | (mass%) | 100 | 100 | 100 | 100 | 0 |
| Content of aliphatic dicarboxylic acid compound having 2 to 16 carbon atoms relative to 100 parts by mole of aliphatic diol having 2 to 16 carbon atoms (parts by mole) | | | 102 | 90 | 100 | 97 | 80 |

(continued)

|  | | Production Example 1 | Production Example 2 | Production Example 3 | Production Example 4 | Production Example 5 |
|---|---|---|---|---|---|---|
| Polyester | | Polyester A | Polyester B | Polyester C | Polyester D | Polyester M |
| Physical properties | $\Delta H$ (J/g) | 137 | 107 | 129 | 91 | 15 |
| | SP value ($(MPa)^{1/2}$) | 19.3 | 20.5 | 19.4 | 22.6 | 24.6 |
| | Melting point (°C) | 96 | 86 | 78 | 114 | 141 |
| | Weight average molecular weight (Mw) | 32,000 | 12,300 | 16,000 | 15,000 | 14,200 |

Examples 1 to 9, Comparative Examples 1 to 6, and Reference Examples 1 to 4

The raw material components shown in Tables 2 to 5 were prepared, and the components except for zinc oxide, sulfur, and vulcanization accelerators 1 and 2 were kneaded in the formulations shown in Tables 2 to 5 using a Banbury mixer at a maximum temperature of 150°C for 4 minutes. Then, zinc oxide, sulfur, and the vulcanization accelerator 1 or 2 were added, and the mixture was kneaded at a maximum temperature of 110°C for 2 minutes to obtain an unvulcanized rubber composition.

The obtained unvulcanized rubber composition was heated at 160°C for 30 minutes to a sheet-shaped vulcanized molded rubber body. The sheet-shaped vulcanized molded rubber body had a thickness of 2 mm.

Details of each component shown in Tables 2 to 5 are as follows.

Rubber Component

- NR: RSS#3
- SBR 1: Solution polymerization SBR, product name: HPR850 manufactured by JSR Corporation, styrene content: 27.5% by mass
- SBR 2: Emulsion polymerization SBR, product name: NIPOL1502 manufactured by Zeon Corporation, styrene content: 23.5% by mass

Polyester

- Polyesters A to D and M obtained in Production Examples 1 to 5

Inorganic Filler

- Silica: product name: Nipsil AQ manufactured by Tosoh Silica Corporation, BET specific surface area: 205 $m^2$/g,
- Carbon black: Furnace black, product name: N234 manufactured by Beilum Carbon Chemical, DBP absorption: 125 $cm^3$/100 g, $N_2AS$: 117 $m^2$/g,

Other Additives

- Silane coupling agent: product name: Si75 manufactured by Evonik
- Process oil: naphthenic process oil, product name: SUNTHENE 410 manufactured by Japan Sun Oil Company, Ltd.
- Stearic acid: product name: LUNAC S-70V manufactured by Kao Corporation
- Antioxidant: N-(1,3-dimethylbutyl)-N'-phenyl-p-phenylenediamine, product name: Nocrac 6C manufactured by Ouchi Shinko Chemical Industrial Co., Ltd.

- Zinc oxide: Fujifilm Wako Pure Chemical Corporation Reagent, zinc oxide (1st Grade)
- Sulfur: Fujifilm Wako Pure Chemical Corporation Reagent, sulfur (powder, Practical Grade)
- Vulcanization accelerator 1: Sulfenamide vulcanization accelerator N-tert-butyl-2-benzothiazylsulfenamide (TBBS) "Sanceler NS" manufactured by Sanshin Chemical Industry Co., Ltd.
- Vulcanization accelerator 2: Sulfenamide vulcanization accelerator N-cyclohexyl-2-benzothiazolylsulfenamide, product name: Nocceler CZ-G manufactured by Ouchi Shinko Chemical Industrial Co., Ltd.

Evaluation of Abrasion Resistance

A test piece having a diameter of 50 mm and a thickness of 10 mm and having a hole whose size is equal to that of a dedicated core bar was produced from the obtained sheet-shaped vulcanized molded rubber body, the FPS abrasion volume was measured under the following conditions: using an FPS abrasion tester (AB-2012) manufactured by Ueshima Seisakusho Co., Ltd., METABRIT (particle size was 240, abrasive grain A) manufactured by Noritake Coated Abrasive Co., Ltd. was used as an abrasion surface, the sample speed was 80 m/min, the load was 40 N, the talc feeder was 0.4 rpm, the set temperature was 35°C, and the slip ratio was 10%. The measurement results are shown in Tables 2 to 5.
Regarding the measured FPS abrasion volumes, the FPS abrasion volume of Reference Example 1 in Table 2, the FPS abrasion volume of Reference Example 2 in Table 3, the FPS abrasion volume of Reference Example 3 in Table 4, and the FPS abrasion volume of Reference Example 4 in Table 5 were set to 100, and relative values are shown in these tables.
The smaller the relative value of the FPS abrasion volume is, the smaller the abrasion volume is, and the higher the abrasion resistance is.

Evaluation of Storage Modulus (G')

The storage modulus (G') of the obtained sheet-shaped vulcanized molded rubber body was measured using a viscoelasticity measuring device (ARES-G2, manufactured by TA Instruments) under the conditions that the temperature was 50°C, the dynamic strain was 5%, and the frequency was 10 Hz. The measurement results are shown in Tables 2 to 5.
Regarding the measured storage moduli, the storage modulus (G') of Reference Example 1 in Table 2, the storage modulus (G') of Reference Example 2 in Table 3, the storage modulus (G') of Reference Example 3 in Table 4, and the storage modulus (G') of Reference Example 4 in Table 5 were set to 100, and relative values are shown in these tables.
A larger relative value of the storage modulus (G') indicates a larger storage modulus, which in turn indicates higher block rigidity when such a molded rubber body is used in tires or the like, and superior vehicle steering stability when such a molded rubber body is used in tire members.

Evaluation of Loss Tangent (tan$\delta$)

The loss tangent (tan$\delta$) of the obtained sheet-shaped vulcanized molded rubber body was measured using a viscoelasticity measuring device (ARES-G2, manufactured by TA Instruments) under the conditions that the temperature was 50°C, the dynamic strain was 5%, and the frequency was 10 Hz. The measurement results are shown in Tables 2 to 5.
Regarding the measured loss tangents (tan$\delta$), the loss tangent (tan$\delta$) of Reference Example 1 in Table 2, the loss tangent (tan$\delta$) of Reference Example 2 in Table 3, the loss tangent (tan$\delta$) of Reference Example 3 in Table 4, and the loss tangent (tan$\delta$) of Reference Example 4 in Table 5 were set to 100, and relative values are shown in these tables.
The smaller the relative value of the loss tangent (tan$\delta$), the smaller the rolling resistance of the tire when such a molded rubber body is used in tire members, and the smaller the heat generation and the lower the fuel consumption.

[Table 2]

| | | | Ex. 1 | Ex. 2 | Ex. 3 | Ex. 4 | Ex. 5 | Comp. Ex. 1 | Ref. Ex. 1 |
|---|---|---|---|---|---|---|---|---|---|
| Formulation (parts by mass) | Rubber component | NR | 100.0 | 100.0 | 100.0 | 100.0 | 100.0 | 100.0 | 100.0 |
| | | SBR 1 | - | - | - | - | - | - | - |
| | | SBR 2 | - | - | - | - | - | - | - |
| | Polyester | Polyester A | 1.5 | 3.0 | - | - | - | - | - |
| | | Polyester B | - | - | 1.5 | - | - | - | - |
| | | Polyester C | - | - | - | 1.5 | - | - | - |
| | | Polyester D | - | - | - | - | 1.5 | - | - |
| | | Polyester M | - | - | - | - | - | 1.5 | - |
| | Inorganic filler | Carbon black | 15.0 | 15.0 | 15.0 | 15.0 | 15.0 | 15.0 | 15.0 |
| | | Silica | 40.0 | 40.0 | 40.0 | 40.0 | 40.0 | 40.0 | 40.0 |
| | Additive | Silane coupling agent | 3.2 | 3.2 | 3.2 | 3.2 | 3.2 | 3.2 | 3.2 |
| | | Process oil | - | - | - | - | - | - | - |
| | | Stearic acid | 2.0 | 2.0 | 2.0 | 2.0 | 2.0 | 2.0 | 2.0 |
| | | Antioxidant | 2.0 | 2.0 | 2.0 | 2.0 | 2.0 | 2.0 | 2.0 |
| | | Zinc oxide | 3.0 | 3.0 | 3.0 | 3.0 | 3.0 | 3.0 | 3.0 |
| | | Sulfur | 1.5 | 1.5 | 1.5 | 1.5 | 1.5 | 1.5 | 1.5 |
| | | Vulcanization accelerator 1 | 1.8 | 1.8 | 1.8 | 1.8 | 1.8 | 1.8 | 1.8 |
| | | Vulcanization accelerator 2 | - | - | - | - | - | - | - |
| | | Polvester/NR | 0.02 | 0.03 | 0.02 | 0.02 | 0.02 | 0.02 | 0.00 |
| Evaluation | | Abrasion resistance (relative value)* 1 | 71 | 68 | 69 | 73 | 68 | 112 | 100 |
| | | Storage modulus (G') (relative value)* 1 | 109 | 106 | 103 | 103 | 105 | 121 | 100 |
| | | Loss tangent (tan$\delta$) (relative value)* 1 | 117 | 110 | 111 | 107 | 114 | 122 | 100 |

*1: Relative value when each evaluation result of Reference Example 1 is set to 100

[Table 3]

| | | | Ex. 6 | Ex. 7 | Ref. Ex. 2 |
|---|---|---|---|---|---|
| Formulation (parts by mass) | Rubber component | NR | 100.0 | 100.0 | 100.0 |
| | | SBR 1 | - | - | - |
| | | SBR 2 | - | - | - |
| | Polyester | Polyester A | 1.0 | 2.0 | - |
| | | Polyester B | - | - | - |
| | | Polyester C | - | - | - |
| | | Polyester D | - | - | - |
| | | Polyester M | - | - | - |
| | Inorganic filler | Carbon black | 50.0 | 50.0 | 50.0 |
| | | Silica | - | - | - |
| | Additive | Process oil | - | - | - |
| | | Stearic acid | 2.0 | 2.0 | 2.0 |
| | | Antioxidant | 2.0 | 2.0 | 2.0 |
| | | Zinc oxide | 3.0 | 3.0 | 3.0 |
| | | Sulfur | 1.5 | 1.5 | 1.5 |
| | | Vulcanization accelerator 1 | 1.8 | 1.8 | 1.8 |
| | | Vulcanization accelerator 2 | - | - | - |
| | | Polvester/NR | 0.01 | 0.02 | 0.00 |
| Evaluation | | Abrasion resistance (relative value)* 1 | 90 | 89 | 100 |
| | | Storage modulus (G') (relative value)* 1 | 103 | 102 | 100 |
| | | Loss tangent (tan$\delta$) (relative value)* 1 | 108 | 105 | 100 |

*1: Relative value when each evaluation result of Reference Example 2 is set to 100

[Table 4]

| | | | Ex. 8 | Ex. 9 | Comp. Ex. 2 | Ref. Ex. 3 |
|---|---|---|---|---|---|---|
| Formulation (parts by mass) | Rubber component | NR | 50.0 | 50.0 | 50.0 | 50.0 |
| | | SBR 1 | 50.0 | 50.0 | 50.0 | 50.0 |
| | | SBR 2 | - | - | - | - |
| | Polyester | Polyester A | 2.0 | 10.0 | - | - |
| | | Polyester B | - | - | - | - |
| | | Polyester C | - | - | - | - |
| | | Polyester D | - | - | - | - |
| | | Polyester M | - | - | 10.0 | - |
| | Inorganic filler | Carbon black | 5.0 | 5.0 | 5.0 | 5.0 |
| | | Silica | 65.0 | 65.0 | 65.0 | 65.0 |
| | Additive | Silane coupling agent | 5.2 | 5.2 | 5.2 | 5.2 |
| | | Process oil | 10.0 | 10.0 | 10.0 | 10.0 |
| | | Stearic acid | 2.0 | 2.0 | 2.0 | 2.0 |
| | | Antioxidant | 2.0 | 2.0 | 2.0 | 2.0 |
| | | Zinc oxide | 3.0 | 3.0 | 3.0 | 3.0 |
| | | Sulfur | 1.5 | 1.5 | 1.5 | 1.5 |
| | | Vulcanization accelerator 1 | - | - | - | - |
| | | Vulcanization accelerator 2 | 1.8 | 1.8 | 1.8 | 1.8 |
| | | Polyester/NR | 0.04 | 0.20 | 0.20 | 0.00 |
| Evaluation | | Abrasion resistance (relative value)* 1 | 83 | 81 | 141 | 100 |
| | | Storage modulus (G') (relative value)* 1 | 110 | 139 | 108 | 100 |
| | | Loss tangent (tan$\delta$) (relative value)* 1 | 105 | 134 | 104 | 100 |

*1: Relative value when each evaluation result of Reference Example 3 is set to 100

[Table 5]

| | | | Ref. Ex. 4 | Comp. Ex. 3 | Comp. Ex. 4 | Comp. Ex. 5 | Comp. Ex. 6 |
|---|---|---|---|---|---|---|---|
| Formulation (parts by mass) | Rubber component | NR | - | - | - | - | - |
| | | SBR 1 | - | - | - | - | - |
| | | SBR 2 | 100.0 | 100.0 | 100.0 | 100.0 | 100.0 |
| | Polyester | Polyester A | - | 1.5 | 10.0 | - | - |
| | | Polyester B | - | - | - | - | - |
| | | Polyester C | - | - | - | - | - |
| | | Polyester D | - | - | - | - | - |
| | | Polyester M | - | - | - | 1.5 | 10.0 |
| | Inorganic filler | Carbon black | 5.0 | 5.0 | 5.0 | 5.0 | 5.0 |
| | | Silica | 65.0 | 65.0 | 65.0 | 65.0 | 65.0 |
| | Additive | Silane coupling agent | 5.2 | 5.2 | 5.2 | 5.2 | 5.2 |
| | | Process oil | 10.0 | 10.0 | 10.0 | 10.0 | 10.0 |
| | | Stearic acid | 2.0 | 2.0 | 2.0 | 2.0 | 2.0 |
| | | Antioxidant | 2.0 | 2.0 | 2.0 | 2.0 | 2.0 |
| | | Zinc oxide | 3.0 | 3.0 | 3.0 | 3.0 | 3.0 |
| | | Sulfur | 1.5 | 1.5 | 1.5 | 1.5 | 1.5 |
| | | Vulcanization accelerator 1 | - | - | - | - | - |
| | | Vulcanization accelerator 2 | 1.8 | 1.8 | 1.8 | 1.8 | 1.8 |
| | | Polyester/NR | - | - | - | - | - |
| Evaluation | | Abrasion resistance (relative value)* 1 | 100 | 104 | 106 | 104 | 111 |
| | | Storage modulus (G') (relative value)* 1 | 100 | 105 | 147 | 111 | 143 |
| | | Loss tangent (tanδ) (relative value)* 1 | 100 | 102 | 95 | 106 | 126 |
| *1: Relative value when each evaluation result of Reference Example 4 is set to 100 | | | | | | | |

From Tables 2 to 5, it is confirmed that the molded rubber bodies obtained in Examples 1 to 9 of the present invention have superior abrasion resistance and higher storage moduli, compared to the molded rubber bodies obtained in Comparative Examples 1 to 6. Further, it is confirmed that the molded rubber bodies obtained in Examples 1 to 5 have reduced loss tangents, compared to the molded rubber body obtained in Comparative Example 1.

Comparison between Reference Example 1 and Comparative Examples 3 to 6 revealed that Comparative Examples 3 to 6, which do not contain natural rubber but contain polyester, have lower abrasion resistance than Reference Example 1, which does not contain either natural rubber or polyester. That is, it is confirmed that, even when the rubber composition and the molded rubber body contain a polyester, if they do not contain natural rubber as a rubber component, the abrasion resistance cannot be improved.


Industrial Applicability

According to the present invention, it is possible to provide a rubber composition having high abrasion resistance and a high storage modulus, a molded rubber body obtained using the rubber composition, a tire member, and a method for improving the abrasion resistance of the rubber composition. The obtained molded rubber body can be particularly suitably used in applications such as various tires for passenger cars, small and medium trucks, and large vehicles (large trucks, buses, construction vehicles, and the like), tire members such as tire treads, various rubber belts, various sealing materials, vibration-isolating and vibration-proof materials, shoe soles, and the like.

**Claims**

1. A rubber composition comprising:

   a rubber component; and
   a polyester,
   wherein the rubber component comprises natural rubber,
   the polyester is a polycondensate of an alcohol component and a carboxylic acid component,
   a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

2. The rubber composition according to claim 1,
   wherein the aliphatic diol is an $\alpha,\omega$-linear alkanediol having 2 to 16 carbon atoms.

3. The rubber composition according to claim 1 or 2,
   wherein the aliphatic dicarboxylic acid compound is an $\alpha,\omega$-linear aliphatic dicarboxylic acid having 2 to 16 carbon atoms.

4. The rubber composition according to any one of claims 1 to 3,
   wherein the polyester has a weight average molecular weight of 3000 or more and 100,000 or less.

5. The rubber composition according to any one of claims 1 to 4,
   wherein the polyester has a melting point of 60°C or higher and 150°C or lower.

6. The rubber composition according to any one of claims 1 to 5,
   wherein the rubber component further comprises a synthetic rubber.

7. The rubber composition according to claim 6,
   wherein the synthetic rubber is a diene-based synthetic rubber.

8. The rubber composition according to claim 6 or 7,
   wherein a mass ratio of a natural rubber content to a synthetic rubber content (the natural rubber/the synthetic rubber) is 50/50 or more.

9. The rubber composition according to any one of claims 1 to 8, further comprising
   an inorganic filler.

10. The rubber composition according to any one of claims 1 to 9, further comprising

    a process oil,
    wherein a process oil content is 4 parts by mass or more and 16 parts by mass or less relative to 100 parts by mass of the rubber component.

11. The rubber composition according to any one of claims 1 to 10,
    wherein a polyester content is 1.0 part by mass or more and 30 parts by mass or less relative to 100 parts by mass of the rubber component.

12. The rubber composition according to any one of claims 1 to 11,
    wherein a mass ratio of a polyester content to a natural rubber content ([the polyester content]/[the natural rubber content]) is 0.01 or more and 0.20 or less.

13. A molded rubber body obtained by vulcanizing the rubber composition according to any one of claims 1 to 12.

**14.** A tire member comprising
the molded rubber body according to claim 13.

**15.** A method for producing the rubber composition according to any one of claims 1 to 12, comprising:

a step (1) of kneading a composition comprising a rubber component and a polyester, wherein the rubber component comprises natural rubber, the polyester is a polycondensate of an alcohol component and a carboxylic acid component, a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more; and
a step (2) of further adding and mixing sulfur.

**16.** A method for producing a molded rubber body, comprising
a step of vulcanizing the rubber composition according to any one of claims 1 to 12.

**17.** Use of the rubber composition according to any one of claims 1 to 12, for improving abrasion resistance.

**18.** A method for improving abrasion resistance of a molded rubber body comprising a rubber component and a polyester,

wherein the rubber component comprises natural rubber,
the polyester is a polycondensate of an alcohol component and a carboxylic acid component,
a content of an aliphatic diol having 2 to 16 carbon atoms in the alcohol component is 85% by mass or more, and a content of an aliphatic dicarboxylic acid compound having 2 to 16 carbon atoms in the carboxylic acid component is 50% by mass or more.

## INTERNATIONAL SEARCH REPORT

| International application No. |
|---|
| **PCT/JP2024/014204** |

**A.    CLASSIFICATION OF SUBJECT MATTER**

*C08L 7/00*(2006.01)i; *B60C 1/00*(2006.01)i; *C08K 3/013*(2018.01)i; *C08L 9/00*(2006.01)i; *C08L 67/02*(2006.01)i; *C08L 91/00*(2006.01)i

FI:   C08L7/00; C08L67/02; C08L9/00; C08K3/013; C08L91/00; B60C1/00 Z

According to International Patent Classification (IPC) or to both national classification and IPC

**B.    FIELDS SEARCHED**

Minimum documentation searched (classification system followed by classification symbols)

C08L7/00; B60C1/00; C08K3/013; C08L9/00; C08L67/02; C08L91/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | JP 2007-039585 A (SUMITOMO RUBBER INDUSTRIES, LTD.) 15 February 2007 (2007-02-15) <br> claims, paragraphs [0023], [0032], [0037], example 2 | 1-18 |
| X | WO 2021/193795 A1 (KAO CORPORATION) 30 September 2021 (2021-09-30) <br> claims, paragraphs [0005], [0026], [0031], examples 1-12 | 1-18 |

☐ Further documents are listed in the continuation of Box C.      ☑ See patent family annex.

| | | | |
|---|---|---|---|
| *    | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 May 2024** | **11 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
**Information on patent family members**

International application No.

**PCT/JP2024/014204**

| Patent document cited in search report | | | Publication date (day/month/year) | Patent family member(s) | | | Publication date (day/month/year) |
|---|---|---|---|---|---|---|---|
| JP | 2007-039585 | A | 15 February 2007 | US | 2007/0032593 | A1 | |
| | | | | claims, paragraphs [0029], [0039], [0044], example 2 | | | |
| | | | | EP | 1749855 | A2 | |
| | | | | CN | 1908047 | A | |
| WO | 2021/193795 | A1 | 30 September 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020094113 A
- JP 2012136586 A

- WO 2021193795 A